# EUROPÄISCHE PATENTSCHRIFT

(11) **EP 2 276 590 B1**
(45) Veröffentlichungstag und Bekanntmachung des Hinweises auf die Patenterteilung: **16.05.2012**
(21) Anmeldenummer: 09721655.0
(22) Anmeldetag: 17.03.2009
(51) Int. Cl.: B21D 39/02, B21D 19/04, B25J 9/00

(54) **FALZEINRICHTUNG UND FALZVERFAHREN**
FOLDING DEVICE AND FOLDING METHOD
DISPOSITIF ET PROCÉDÉ DE PLIAGE

(30) Priorität: 17.03.2008 DE 202008003687 U
(43) Veröffentlichungstag der Anmeldung: 26.01.2011
(73) Patentinhaber: KUKA Systems GmbH, 86165 Augsburg (DE)
(72) Erfinder: KRAUS, Johann, 86690 Mertingen (DE); MAISCHBERGER, Johann, 86424 Dinkelscherben (DE); STURM, Thomas, 86259 Wiedenzhausen (DE); NEIDER, Reinhold, 86462 Langweid (DE)
(74) Vertreter: Ernicke, Hans-Dieter
(86) Internationale Anmeldenummer: PCT/EP2009/001970
(87) Internationale Veröffentlichungsnummer: WO 2009/115305

(56) Entgegenhaltungen:
- GB-A- 2 441 709
- JP-A- 2006 110 628
- JP-A- 2007 152 395
- JP-A- 2008 012 572

## Beschreibung

Die Erfindung betrifft eine Falzeinrichtung und ein Falzverfahren mit den Merkmalen im Oberbegriff des Vorrichtungs- und Verfahrenshauptanspruchs 1 und 14 (siehe z. B. GB-A-2441709).

Bei Fahrzeugkarosserien werden Blechrändern von mehrlagigen Blechen durch Falzen oder Bördeln abgekantet und ggf. miteinander verbunden, wobei am Falz auch eine Dichtmasse eingebracht werden kann. Bei manchen Karosseriebereichen, insbesondere am Radhaus oder am Radausschnitt, bestehen bei der dortigen gebogenen Kontur Probleme mit dem Falzen. In der Praxis werden die dortigen Blechränder bei der Herstellung der Seitenwand gefalzt. Dies geschieht vor dem Fügen der Seitenwand mit den anderen Karosserieteilen, insbesondere der Bodengruppe, den Dachspriegeln oder dgl.. Dieser Falzprozess wird mit herkömmlichen Falz- oder Bördeleinrichtungen durchgeführt.

Es ist Aufgabe der vorliegenden Erfindung, eine bessere und flexiblere Falztechnik aufzuzeigen.

Die Erfindung löst diese Aufgabe mit den Merkmalen im Vorrichtung- und Verfahrenshauptanspruchs 1 und 14. Die beanspruchte Falzeinrichtung bietet eine hohe Flexibilität und erlaubt ein Falzen von Werkstücken auch in bisher problematischen Bereichen oder Positionen. Insbesondere können die gebogenen Falzränder oder Falzkonturen von Radhäusern von Fahrzeugkarosserien, insbesondere von Seitenwänden, in der montierten und gefügten Stellung gefalzt werden. Das Falzen lässt sich dadurch besser in den Fertigungsprozess integrieren. An bereits montierten und gefügten Seitenwänden kann außerdem auf die aktuelle und beim Fügen möglicherweise leicht veränderte Lage und Form des zu fügenden Werkstückbereichs Rücksicht genommen werden.

Die Falzeinrichtung mit dem vom Manipulator geführten Falzwerkzeug, vorzugsweise einem Rollfalzwerkzeug, und dem Gegenhalter ist hoch flexibel und lässt sich auf beliebige Arten und Formen von Werkstücken anpassen. Der zustellbare Gegenhalter kann die Funktion eines mobilen Falzbettes haben und lässt sich an dem zu falzenden Werkstückbereich zustellen und in geeigneter Lage positionieren. Die Zustellung kann über eine nachgiebige Schutzvorrichtung, einen sog. soft touch, sehr schonend erfolgen. Außerdem kann die Nachgiebigkeit der Schutzvorrichtung mit der Zustellung gekoppelt werden, was zu einer sehr hohen Zustellpräzision führt.

Der Gegenhalter bietet ein Falzbett in definierter Position und kann die vom Falzwerkzeug aufgebrachten Falzkräfte aufnehmen und nach außen abstützen. Dies ermöglicht eine saubere und exakte Falzbildung auch bei problematischen Falzkonturen. Durch den am Werkstück anliegenden Gegenhalter werden außerdem unerwünschte Verformungen oder Beschädigungen, insbesondere Oberflächenbeschädigungen, des Werkstücks vermieden. Vermieden werden ferner undefinierte Bereiche von Radiusänderungen und undefinierte Krafteinwirkungen. Instabilitätsfaktoren für den Falzprozess werden ausgeschaltet.

Das Falzwerkzeug kann optimal auf den Falzprozess abgestimmt werden und lässt sich vom Manipulator in der gewünschten und optimalen Weise handhaben. Mit dem Falzwerkzeug brauchen nur die zum Umbiegen der Blechränder oder Randflansche erforderlichen Kräfte und Bewegungen aufgebracht werden. Eine Abstützung der Falz- und Reaktionskräfte innerhalb des Falzwerkzeugs durch eine beispielsweise zangenförmige Gestaltung, ist nicht erforderlich. Das Falzwerkzeug kann dadurch eine schlankere Gestalt haben und größere kinematische Freiheiten und eine größere Beweglichkeit bieten.

Durch die externe Abstützbarkeit des Gegenhalters kann das Werkstück geringer belastet werden. Insbesondere ist keine Abstützung der Falzkräfte am Werkstück selbst durch eine dortige Abstützung des Gegenhalters erforderlich. Die externe Gegenhalterabstützung bietet außerdem Vorteile für die Schnelligkeit und Zuverlässigkeit des Falzprozesses. Die Zustellbewegungen können schnell und sicher ausgeführt werden, was die Taktzeit verkürzt und auch einen schnellen Wechsel der Werkstücke ermöglicht. Die externe Gegenhalterabstützung hat außerdem den Vorteil, dass die Falzkräfte in optimaler Weise und sicher ortsfest abgestützt werden können. Der Gegenhalter kann exakt und mit großer Fläche an dem zu falzenden Werkstückbereich anliegen. Verformungen an diesem Anlagebereich des Werkstücks und auch Relativbewegungen zwischen Werkstück und Gegenhalter können zu Gunsten einer optimalen Falzkraftabstützung vermieden werden. Durch die externe Abstützung gibt der Gegenhalter auch nicht in unerwünschter Weise nach. Vielmehr garantiert er einen sicheren und exakten Falzprozess.

Für den Gegenhalter kann eine externe Stützeinrichtung mit einer mehrachsigen beweglichen Positioniereinrichtung und einer Fixiereinrichtung vorgesehen sein. Die Stützeinrichtung erlaubt eine genaue Zustellung des mit einem angepassten und ggf. auswechselbaren Formteil ausgerüsteten Gegenhalters an den zu falzenden Werkstückbereich. Hierbei können etwaige Toleranzen oder Lageabweichungen des zu falzenden Werkstückbereichs kompensiert werden. Die Zustellung kann mittels eigener Antriebe der Stützeinrichtung oder alternativ durch den Manipulator erfolgen. Mit der Fixiereinrichtung werden die Beweglichkeiten der Positioniereinrichtung in der aufgefundenen Falzposition blockiert und die Stützeinrichtung zur sicheren Aufnahme der Falzkräfte versteift.

Zum Falzen kann der Manipulator das Falzwerkzeug entlang der Falzkontur bewegen und dabei die ein oder mehreren Blechränder oder Randflansche in ein oder mehreren Schritten biegen und falzen. Das Falzwerkzeug kann hierfür multifunktional sein und mehrere drehbare und ggf. federnd gelagerte Falzrollen aufweisen. Ein mitgeführter Rollenantrieb verbessert den Falzprozess. Durch den Gegenhalter braucht das Falzwerkzeug in der vorerwähnten Weise nur auf den Falzprozess hin gestaltet und optimiert zu werden. Es kann dadurch besonders schlank bauen und eine hohe Funktionalität haben.

Der Manipulator bewegt das Falzwerkzeug entlang einer vorprogrammierten und gespeicherten Bahn. Für die Adaption dieser Bahn an die Ist-Lage des zu falzenden Werkstückbereichs kann eine Erfassungseinrichtung vorhanden sein, die in unterschiedlicher Weise ausgebildet und angeordnet sein kann. Die Erfassung der Lage des zu falzenden Werkstückbereichs bzw. des Falzrands kann vor Ort mittels einer stationären oder vom Manipulator mitgeführten optischen Erfassungseinrichtung erfolgen. Alternativ kann aus der mehrachsigen Zustellbewegung des Gegenhalters an die Karosserie die Lage und ggf. auch die Form des Falzrands bzw. der Falzkontur ermittelt und an die Robotersteuerung für eine eventuelle Anpassung der gespeicherten Falzbahn gemeldet werden. Beide Varianten haben den Vorteil, dass am Prozessort die Ist-Daten der Falzkontur aufgenommen werden und damit aktuell sind. Etwaige vorhergehende Werkstückverformungen beim Fügen oder dergleichen können dadurch einbezogen und berücksichtigt werden.

Alternativ können die Lage und ggf. auch die Form des Falzrands bzw. der Falzkontur zu einem früheren Zeitpunkt und an anderer Stelle aufgenommen und an die Manipulatorsteuerung übermittelt werden. Anhand der erfassten Konturdaten kann die programmierte Bahn ausgerichtet und bei Bedarf korrigiert werden, z.B. durch eine Basisverschiebung.

Die beanspruchte Falzeinrichtung und das zugehörige Falzverfahren bieten neben einer hohen Flexibilität eine große Prozesssicherheit und kurze Taktzeiten. Durch das vorzugsweise nur zum Aufbringen der Falzkräfte benötigte Falzwerkzeug kann der Falzprozessor optimal an die Werkstückgegebenheiten angepasst werden. Etwaige Werkstückabweichungen können kompensiert werden. Außerdem kann das Falzwerkzeug besonders schonend auf das Werkstück einwirken. Der Falz erhält exakt die gewünschte Form und Lage. Bei einer hohen Falzpräzision ergibt sich dabei eine besonders hohe Wirtschaftlichkeit der Falztechnik. Die Falzeinrichtung kann auch in Verbindung mit einem Magazin für mehrere wechselbare Gegenhalter und einem multifunktionalen Falz- und Transportwerkzeug für flexible Fertigungslinien zur Bearbeitung verschiedener Karosserietypen eingesetzt werden.

In den Unteransprüchen sind weitere vorteilhafte Ausgestaltungen der Erfindung angegeben.

Die Erfindung ist in den Zeichnungen beispielsweise und schematisch dargestellt. Im einzelnen zeigen:
- Figur 1:: ein Werkstück mit Teilen einer Falzeinrichtung in perspektivischer Ansicht,
- Figur 2:: einen abgebrochenen und vergrößerten Ausschnitt im Bereich der Falzeinrichtung von Figur 1,
- Figur 3:: eine Seitenansicht des Werkstücks und der komplettierten Falzeinrichtung mit einem Manipulator,
- Figur 4:: eine vergrößerte Seitenansicht eines Gegenhalters mit Stützeinrichtung und eines Falzwerkzeugs,
- Figur 5:: eine Draufsicht auf die Falzeinrichtung gemäß Figur 1,
- Figur 6:: eine vergrößerte Draufsicht des Gegenhalters und der Stützeinrichtung ohne Falzwerkzeug,
- Figur 7:: eine Draufsicht auf das Werkstück mit einer angedeuteten Erfassungseinrichtung,
- Figur 8:: eine perspektivische Ansicht eines Falzwerkzeugs,
- Figur 9:: eine schematische Darstellung eines Radhauses an einer Fahrzeugkarosserie mit den zu falzenden Randflanschen,
- Figur 10 und 11:: verschiedene Flansch- und Falzgeometrien in verschiedenen Falzschritten,
- Figur 12:: eine Schemadarstellung der Kinematik der Falzeinrichtung,
- Figur 13:: eine Variante der Falzeinrichtung mit mehreren magazinierten Gegenhaltern und einer Stützeinrichtung,
- Figur 14:: eine perspektivische Darstellung eines Gegenhalters und einer Stützeinrichtung mit Zustellmodulen von Figur 13,
- Figur 15:: eine Stirnansicht eines Gegenhalters mit einer Schutzeinrichtung,
- Figur 16:: eine abgebrochene perspektivische Ansicht des Gegenhalters von Figur 15,
- Figur 17:: eine Seitenansicht des Gegenhalters von Figur 15,
- Figur 18:: eine perspektivische Darstellung einer Aufhängung des Gegenhalters von Figur 13,
- Figur 19:: eine perspektivische Darstellung eines modifizierten Falzwerkzeugs zum Transport von Gegenhaltern,
- Figur 20:: eine andere vergrößerte perspektivische Darstellung des Gegenhalters und der Stützeinrichtung,
- Figur 21:: eine vergrößerte perspektivische Darstellung der Stützeinrichtung und
- Figur 22:: eine abgebrochene und vergrößerte perspektivische Darstellung eines Zustellmoduls der Stützeinrichtung.

Die Erfindung betrifft eine Falzeinrichtung (1) für Werkstücke (2) und ein Falzverfahren. Bevorzugt betrifft die Erfindung das Roboterfalzen. Das Falzen wird auch als Bördeln bezeichnet.

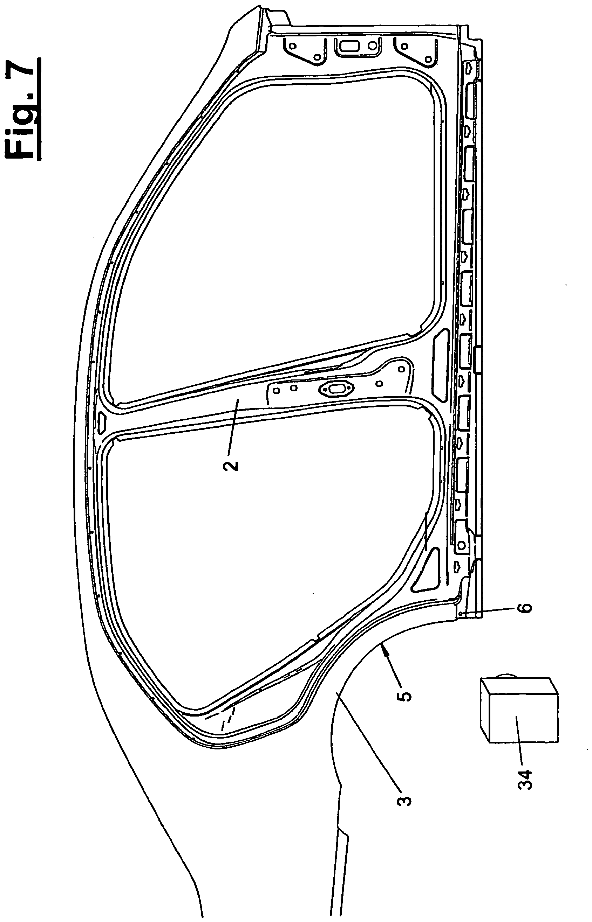

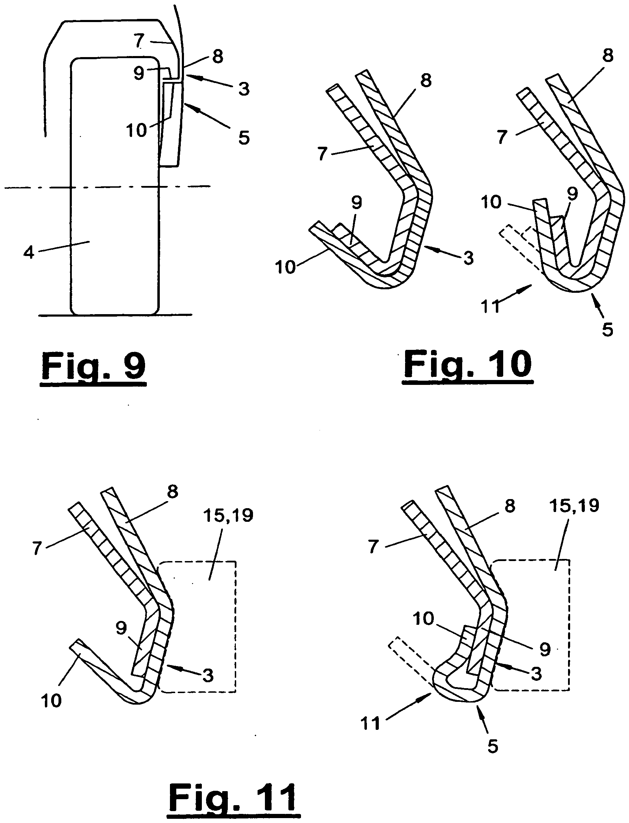

Die Werkstücke (2) können von beliebiger Art und Größe sein. In der bevorzugten Ausführungsform handelt es sich um Karosserieteile, insbesondere um Seitenwände von Rohkarosserien. Eine solche Seitenwand besteht aus mehreren Blechlagen, z.B. einer Innenschale (7) und einer Außenschale (8), die am Rand gefalzt werden sollen. Das Werkstück (2) besitzt ein oder mehrere zu falzende Werkstückbereiche (3). Im gezeigten Ausführungsbeispiel einer Seitenwand (2) ist dies z.B. das hintere Radhaus (3), welches einen gebogenen Falzrand (5) besitzt. Figur 7 und 9 verdeutlichen diese Ausbildung.

Das Radhaus (3) umgibt gemäß Figur 9 das später montierte Fahrzeugrad (4) am oberen Bereich seines Umfangs. In diesem Werkstückbereich (3) weist die Seitenwand (2) ein Innenblech (7) und ein Außenblech (8) auf, die bereits bei der Seitenwandherstellung am Falzrand (5) aufeinander gelegt sein können. Figur 10 und 11 zeigen hierfür zwei Gestaltungsvarianten der Blechlagen (7,8), bei denen in der jeweils auf der linken Seite dargestellten Ausgangslage die inneren und äußeren Blechränder bzw. die sog. Innen- und Außenflansche (9,10) vorgekantet sind. Beim Falzprozess sollen die Innen- und Außenflansche (9,10) in die im rechten Bild von Figur 10 und 11 gezeigte Endlage gebracht werden. Bei der Variante von Figur 10 liegen die bereits zweifach abgekanteten Innen- und Außenflansche (9,10) dicht aneinander und werden beim Falzen noch weiter nach innen gebogen. Figur 10 zeigt die Flanschausgangslage in gestrichelter Form.

In der Variante von Figur 11 ist das Innenblech (7) verkürzt, wobei der Innenflansch (9) nur bis zum vertikalen Schenkel des zweifach abgekanteten Außenflansches (10) reicht. Der Außenflansch (10) wird anschließend mehrfach umgebogen und mit seinem Rand auf den Innenflansch (9) angedrückt. In Figur 10 und 11 werden hierbei unterschiedliche Formen von Falzen (11) gebildet. Bei dem in Figur 11 gezeigten tropfenförmigen Falz kann ein Dichtmittel in den vom Außenflansch (10) umschlossenen Freiraum eingebracht werden.

Als der zu falzende Werkstückbereich (3) wird der Randbereich des Radhauses verstanden, an dem sich die in Figur 10 und 11 beispielsweise dargestellten Flansche oder Blechränder (9,10) befinden. Die untere Biegekante des Werkstückbereichs (3) bildet hierbei den von außen sichtbaren Falzrand (5) oder die Falzkontur am Radhaus. Die Innen- und Außenflansche (9,10) befinden sich auf der Innenseite des Radhauses und sind von außen nicht sichtbar. Von außen sieht man allerdings den in Figur 10 und 11 dargestellten ersten schräg nach innen abgekanteten Flanschbereich, gegen den von der Innenseite her die freien Blechränder oder Innenflansche (9,10) abgekantet und gefalzt werden. Dieser sichtbare Radhausrandbereich ist durch seine schräge Abkantung nach innen und durch seine entsprechend der Falzkontur (5) gebogene Form kritisch hinsichtlich Formänderungen. Der Innen- und/oder Außenflansch (9,10) kann derart gefalzt werden, dass es an diesem sichtbaren Radhausrandbereich nicht zu optisch wahrnehmbaren Formänderungen oder zu Beeinträchtigungen in der Oberflächenqualität kommt.

Wie Figur 7 verdeutlicht, kann das Werkstück (2) bzw. die Seitenwand im Umfeld des zu falzenden Werkstückbereichs (3) ein oder mehrere Referenzmarken (6) aufweisen. Diese haben einen festen und vorgebenen Bezug zur räumlichen Lage des Werkstückbereichs (3) und des Falzrands (5) sowie der Flansche (9,10). Wenn man die Position der ein oder mehreren Referenzmarken (6) erfasst, ist hierdurch über den Lagebezug die räumliche Position des Werkstückbereichs (3) und des Falzrands (5) sowie der Flansche (9,10) und ggf. auch deren Form definiert.

Die Falzeinrichtung (1) ist bevorzugt als Roboterfalzeinrichtung ausgebildet. Sie weist mindestens einen mehrachsig beweglichen Manipulator (13) mit mindestens einem mitgeführten Falzwerkzeug (12) und einen Gegenhalter (15) auf, der die mit dem Falzwerkzeug (12) aufgebrachten Falzkräfte aufnimmt und abstützt. Hierfür kann dem Gegenhalter (15) eine außerhalb des Werkstücks (2) ortsfest abstützbare Stützeinrichtung (15) zugeordnet sein.

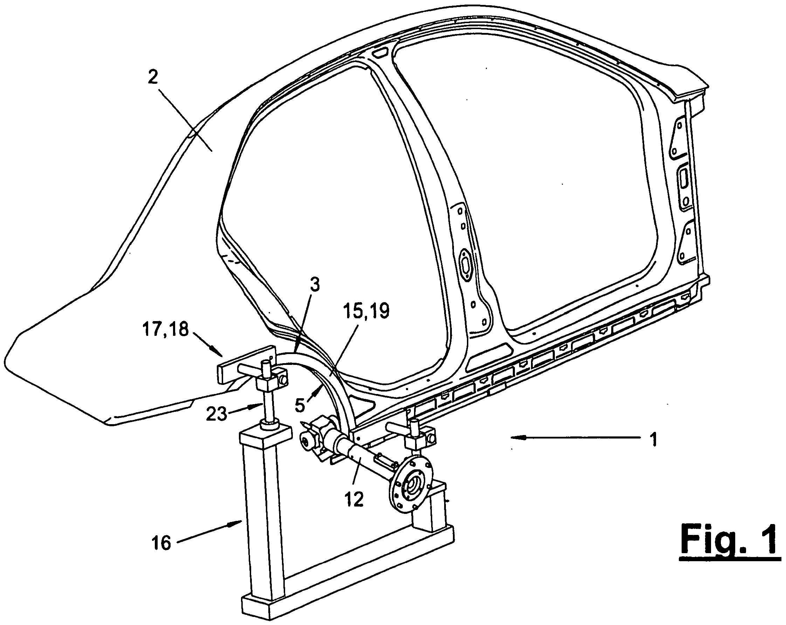

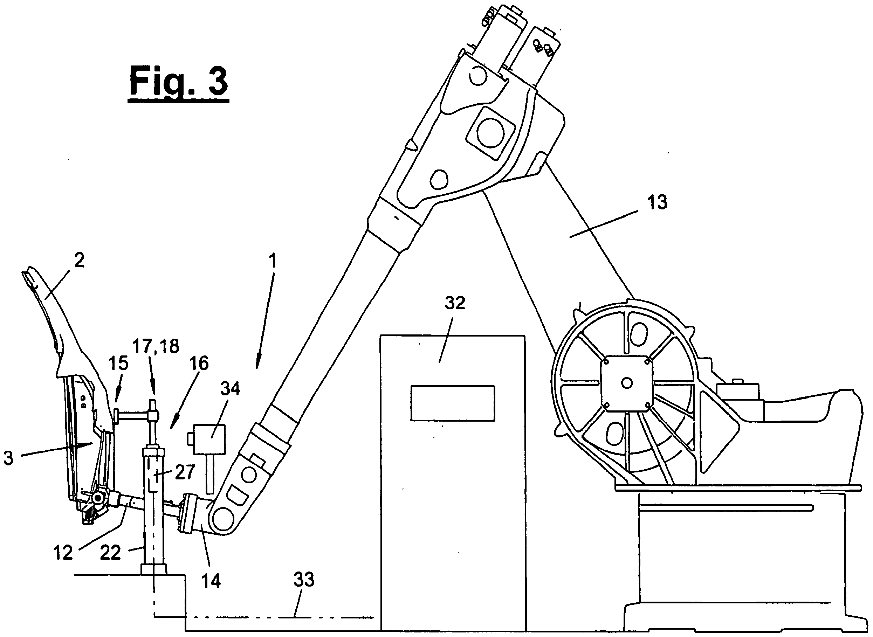

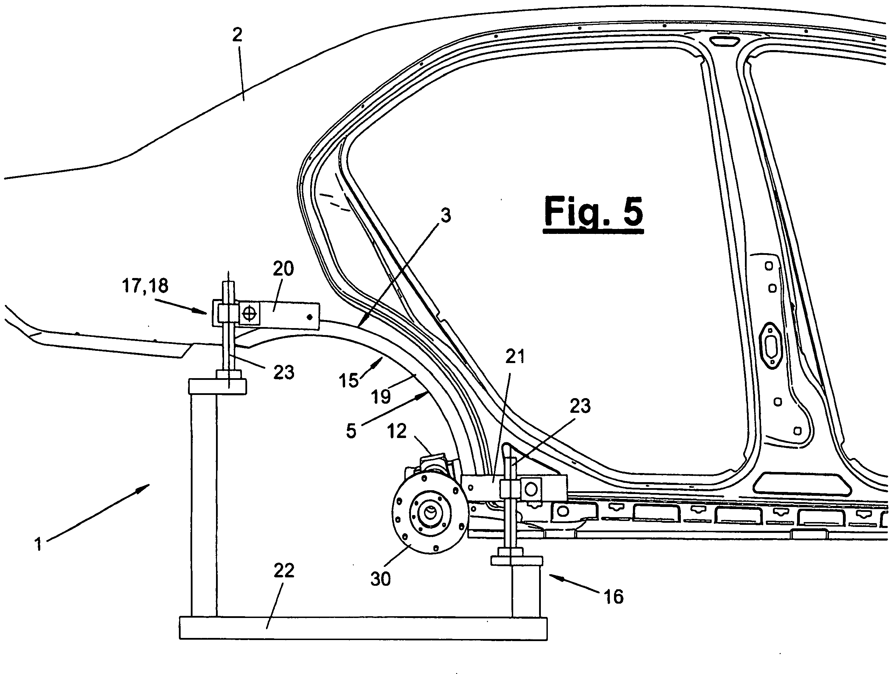

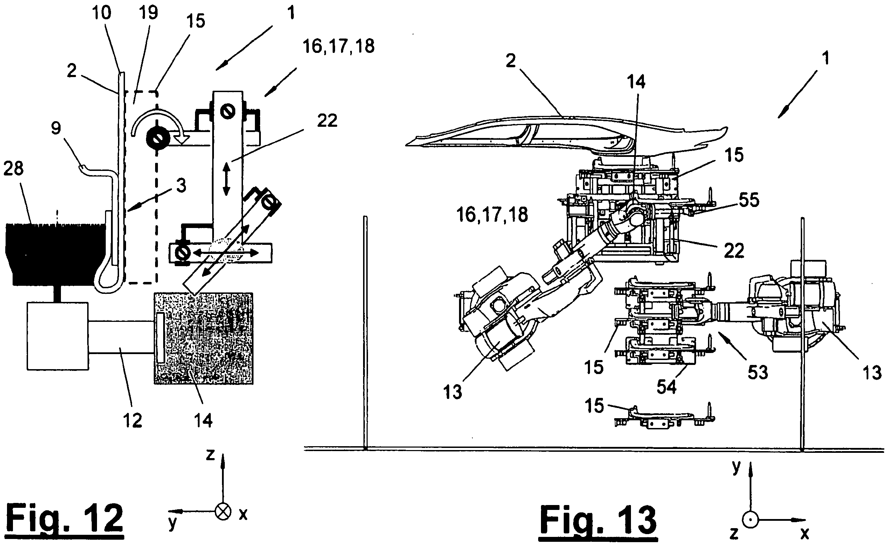

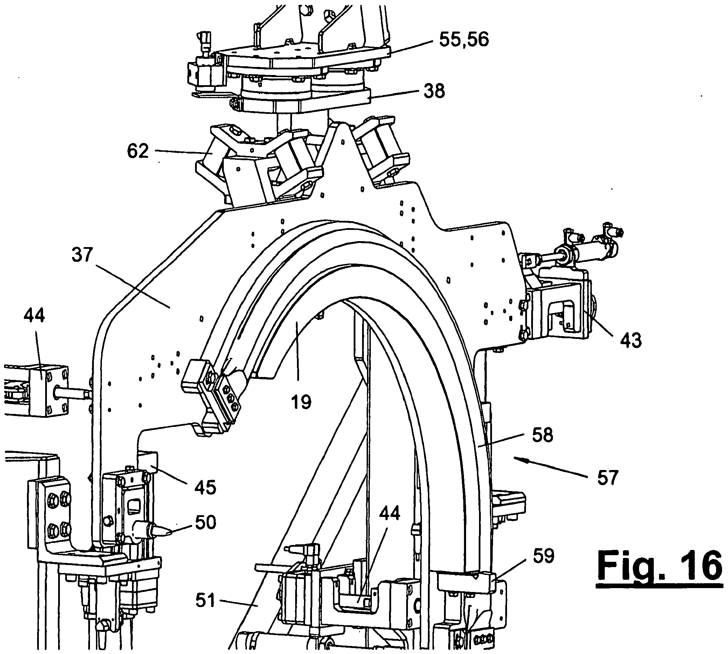

Figur 1 bis 6 zeigen eine erste Variante der Falzeinrichtung (1) und deren Komponenten in verschiedenen Ansichten. In Figur 3 ist der Manipulator (13) dargestellt. In den anderen Figuren ist der Übersichtlichkeit halber nur das Falzwerkzeug (12) gezeigt. Figur 12 zeigt schematisch die Anordnung und Kinematik bzw. Achsanordnung der Falzeinrichtung (1). In Figur 13 bis 22 ist eine zweite Variante der Falzeinrichtung (1) dargestellt.

Der Manipulator (13) weist mehrere translatorische und/oder rotatorische Bewegungsachsen auf. Im bevorzugten Ausführungsbeispiel ist der Manipulator (13) als Roboter, insbesondere als Gelenkarmroboter, ausgebildet und besitzt am Armende eine Hand (14), die ihrerseits mehrere, z.B. zwei oder drei Handachsen haben kann. In der gezeigten Ausführungsform ist die Roboterhand (14) mit drei rotatorischen Handachsen ausgerüstet. Der Gelenkarmroboter (13) hat darüber hinaus drei weitere rotatorische Armachsen. Ferner kann der Manipulator oder Roboter (13) ein oder mehrere Zusatzachsen besitzen, z.B. eine Fahrachse.

Der Manipulator (13) weist außerdem eine Steuerung (32) auf. Diese Manipulator- oder Robotersteuerung (32) kann mehrere zusätzliche Steuerachsen haben, die mit den anderen Komponenten der Falzeinrichtung (1) in geeigneter Weise, z.B. über die in Figur 3 gezeigten Leitungen (33) verbunden sein können. Über die Robotersteuerung (32) kann die gesamte Falzeinrichtung (1) mit allen ihren beweglichen Komponenten gesteuert werden.

Das Werkstück (2), insbesondere die gezeigte Seitenwand, kann zum Falzen in beliebig geeigneter Weise positioniert und festgehalten, insbesondere gespannt werden. Die Seitenwand (2) kann bereits mit anderen Karosserieteilen, z.B. einer Bodengruppe, Dachspriegeln, einem Vorbau oder dgl. gefügt sein. Das Falzen kann insbesondere innerhalb der Fertigungs- und Fügelinie der Fahrzeugkarosserie stattfinden, beispielsweise in der formgebenden Geometrie-oder Framingstation oder in den nachfolgenden Ausschweißstationen. Alternativ kann diesen Fügestationen eine eigene Falzstation nachgeschaltet sein oder an anderer Stelle in die Linie integriert sein. Ferner ist es möglich, den Falzprozess auch bei der Werkstückfertigung, insbesondere der Seitenwandherstellung und damit außerhalb der Fügelinien durchzuführen. In den gezeigten Ausführungsbeispielen ist die Seitenwand (2) bereits gefügt und wird nach dem Ausschweißen gefalzt, wobei die Fahrzeugkarosserie in einer vorgegebenen Position mittels einer geeigneten Spanneinrichtung (nicht dargestellt) fixiert ist.

Der Gegenhalter (15) kann an den zu falzenden Werkstückbereich (3) und insbesondere an den vorerwähnten von außen sichtbaren Radhausrandbereich (3) zugestellt und mit großflächigem Kontakt angelegt werden. Die Zustellung kann mehrstufig erfolgen. Der Gegenhalter (15) nimmt die vom Falzwerkzeug (12) an den innen liegenden Flanschen (9,10) aufgebrachten Falzkräfte auf und stützt sie extern und außerhalb des Werkstücks (2) ab. Die Stützeinrichtung (16) ist hierfür außerhalb des Werkstücks (2) ortsfest abstützbar, z.B. am Stationsboden oder an einer Komponente des Stationsgestells. Der Gegenhalter (15) kann die Form und Funktion eines mobilen Falzbetts haben. Der Werkstückbereich (3) wird dadurch beim Falzen in exakter Lage gehalten und fest sowie sicher abgestützt. Beim Falzen werden die Falzkräfte und Verformungen nur auf die zu falzenden Blechränder oder Innen- und/oder Außenflansche (9,10) aufgebracht. Figur 11 und 12 zeigen in ggf. gestrichelter Darstellung die Ausbildung und Anordnung des Gegenhalters (15) am zu falzenden Werkstückbereich (3).

Der Gegenhalter (15) besitzt mindestens ein Formteil (19), welches in seiner Formgebung an den zu falzenden Werkstückbereich (3), hier den nach außen weisenden Radhausrandbereich, angepasst ist. Das Formteil (19) kann in seiner Form und Erstreckung dem gebogenen Falzrand (5) folgen und lässt diesen für den Zutritt des Falzwerkzeugs (12) in geeigneter Weise frei. Außerdem hat das Formteil (19) an seiner dem zu falzenden Werkstückbereich (3) zugewandten Innenseite eine diesem Werkstückbereich (3) entsprechende Kontur für eine weitgehend flächige Anlage. Das Formteil (19) kann dadurch eng und dicht an den Werkstückbereich (3) zugestellt und angeschmiegt werden.

Das Formteil (19) kann an den Enden mit jeweils einer Halterung (20,21) verbunden sein. Diese Verbindung kann lösbar sein. Auf diese Weise lässt sich das Formteil (19) bei Bedarf, z.B. bei einem Wechsel des Karosserietyps, austauschen. Das Formteil (19) kann außerdem mehrteilig ausgebildet sein und aus mehreren untereinander verbundenen Einzelteilen bestehen.

Die Stützeinrichtung (16) weist eine mehrachsig bewegliche Positioniereinrichtung (17) und eine Fixiereinrichtung (18) auf. Mit der Stützeinrichtung (16) kann der Gegenhalter (15) in die Anlageposition an den zu falzenden Werkstückbereich (3) zugestellt und in dieser Position fixiert werden, wobei die Stützeinrichtung (16) versteift wird und die Falzkräfte aufnehmen und auf dem Untergrund ortsfest abstützen kann.

Die Positioniereinrichtung (17) kann in beliebig geeigneter Weise ausgebildet sein. Sie weist Antriebe mit Stellelementen und Beweglichkeiten bzw. Freiheitsgrade des Gegenhalters (15) relativ zu den Stellelementen auf, die eine Positionsfindung durch Orientierung am Werkstück (2) bzw. Werkstückbereich (3) ermöglichen. Die Stellelemente tragen zumindest in der Endstellung den Gegenhalter (15) und nehmen die Prozesskräfte, insbesondere Falz- und Andrückkräfte auf.

Die Positioniereinrichtung (17) besteht in der ersten Variante z.B. aus mehreren mehrachsig beweglichen Stell-oder Stützelementen (23), die mit einer Halterung (20, 21) fest oder lösbar verbunden sind. Die Stützelemente (23) sind auf einem steifen Gestell (22) der Stützeinrichtung (16) angeordnet, welches z.B. aus einer Basis und mehreren säulenartigen Aufnahmen für die Stützelemente (23) besteht und in geeigneter Weise am Untergrund, am Stationsgestell oder an anderer Stelle ortsfest abgestützt ist. Das Gestell (22) kann starr an einem Untergrund befestigt sein. Es kann alternativ eine Bewegungsachse haben und für den Falzprozess in der Stützstellung arretiert werden.

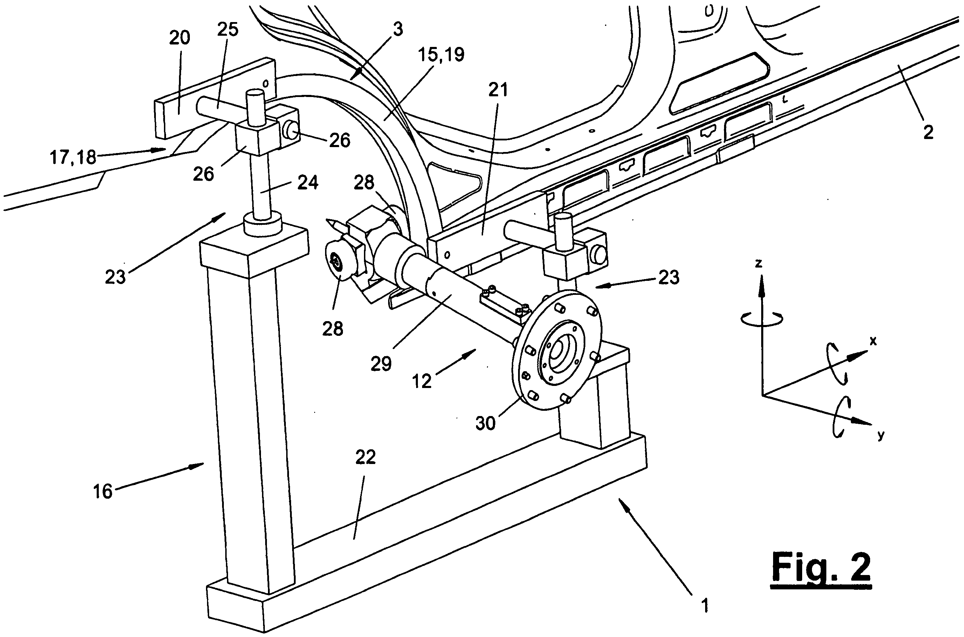

Die Positioniereinrichtung (17) erlaubt die Zustellbewegung des Gegenhalters (15) in die Anlagestellung zum Falzen und eine Rückhubbewegung für die Freigabe und den Abtransport sowie den Wechsel des Werkstücks (2). Sie hat hierfür mehrere Bewegungsachsen. Vorzugsweise bietet die Positioniereinrichtung (17) die in Figur 2 an einem Stationskoordinatensystem dargestellte räumliche und insbesondere sechsachsige Beweglichkeit. Dies sind zum einen translatorische Zustellachsen in x-, y- und z-Richtung sowie Drehbeweglichkeiten um diese drei translatorischen Achsen. Figur 12 zeigt schematisch die mehrachsige Beweglichkeit für die zweite Variante der Stütz- und Positioniereinrichtung (16,17).

Hierfür hat die Positioniereinrichtung (17) mehrere Gelenke (26) und ggf. Schiebeführungen in geeigneter Zahl, Ausbildung und Anordnung. Bei der ersten Variante von Figur 1 bis 6 weisen die Stützelemente (23) hierfür beispielsweise quer zueinander ausgerichtete Stangen (24,25) auf, die untereinander und ggf. mit dem Gestell (22) sowie der zugehörigen Halterung (20,21) durch Gelenke (26) verbunden sind. Alternativ oder zusätzlich zu den Stangen (24,25) können für die translatorische Verschiebung Spindeln eingesetzt werden, die ggf. für die sichere Abstützung eine Selbsthemmung haben. Die zweite, nachfolgend erläuterte Variante der Positioniereinrichtung (17) weist mehrere Zustellmodule (43,44,45) auf.

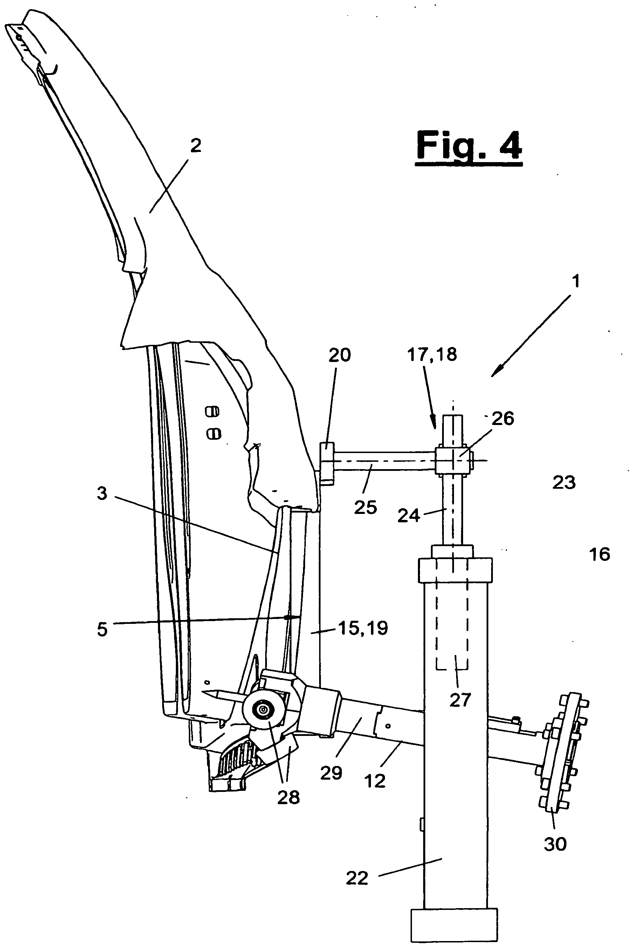

Die Fixiereinrichtung (18) dient zum Fixieren der Positioniereinrichtung (17) und des Gegenhalters (15) in der Anlage- und Abstützposition an dem zu falzenden Werkstückbereich (3). Sie kann hierfür in beliebig geeigneter Weise ausgebildet und angeordnet sein. Auch die Funktion kann unterschiedlich sein. Beispielsweise kann die Fixiereinrichtung (18) steuerbare Spannelemente aufweisen, mit denen die Gelenke (26) und/oder die Schiebeführungen blockiert und wieder freigegegeben werden können. Die Gelenke (26) können ein oder mehrere Achsen haben und z.B. Walzengelenke oder Kugelgelenke sein. Die Spannelemente können hydraulische Spanner, Klemmbacken, pneumatische Stellelemente oder dergleichen zum Fixieren und Anpressen der Gelenkschalen an den Gelenkköpfen sein. Für die Erzeugung der Zustellbewegung und des Rückhubs der Positioniereinrichtung (17) gibt es verschiedene Möglichkeiten. Zum einen kann die Positioniereinrichtung (17) ein oder mehrere eigene Antriebe (27) an den Bewegungsachsen aufweisen. Eine solche Anordnung ist beispielsweise und ausschnittsweise in Figur 3 und 4 dargestellt. Die Antrieb (27) können bei einer Ausgestaltung als selbsthemmende Antriebe, z.B. Spindeltriebe, zugleich eine Abstütz- und Fixierfunktion haben und eine Kombination von Positionier- und Fixiereinrichtung (17,18) bilden. Die Positioniereinrichtung (17) und deren Antriebe (27) sowie die Fixiereinrichtung (18) und deren Spannmittel können mit der Steuerung (32) verbunden sein und von dieser über die erwähnten zusätzlichen Steuerachsen beaufschlagt werden.

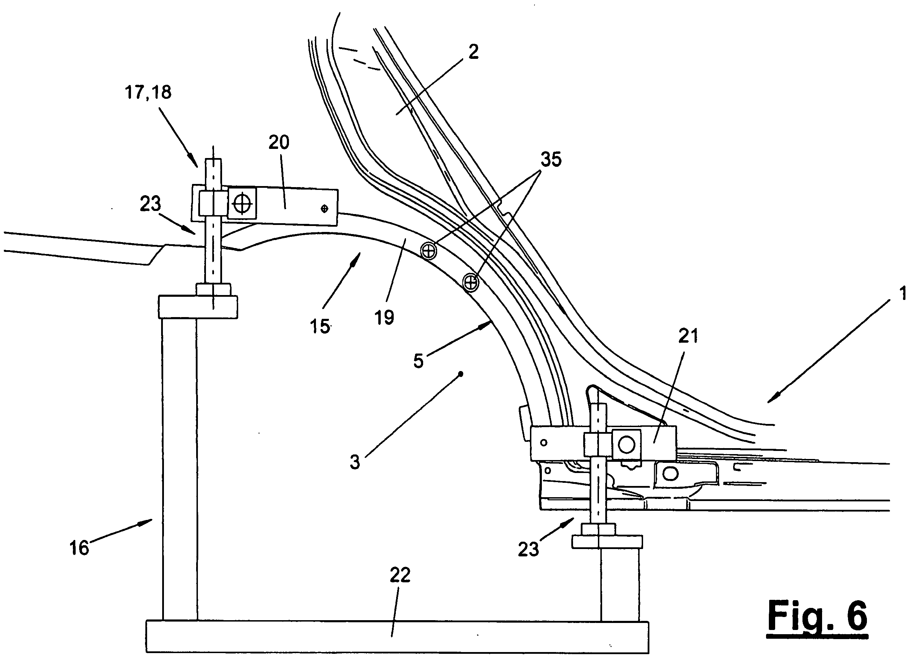

Alternativ oder zusätzlich ist es möglich, die Zustell-und Rückhubbewegung durch den Manipulator (13) auszuführen, der hierfür ein geeignetes Handhabungswerkzeug (nicht dargestellt) aufweist, welches mit dem Gegenhalter (15) und/oder der Positioniereinrichtung (17) in geeigneter Weise in eine vorzugsweise lösbaren Eingriff tritt. Hierfür kann beispielsweise das Formteil (19) ein oder mehrere Anschlüsse (35) aufweisen, die z.B. in Figur 6 andeutungsweise dargestellt sind. Das Handhabungswerkzeug kann mit dem Falzwerkzeug (12) ein Kombiwerkzeug bilden. Alternativ kann an der Roboterhand (14) ein Werkzeugwechsler angeordnet sein, mit dem der Manipulator (13) das Handhabungswerkzeug und das Falzwerkzeug (12) aufnehmen und wechseln kann.

Die Falzeinrichtung (1) kann ferner mindestens eine Erfassungseinrichtung (34) aufweisen, mit der die räumliche Lage und ggf. die Form des zu falzenden Werkstückbereichs (3) bzw. des Falzrands (5) aufgenommen wird. Hierüber kann ermittelt werden, wo sich die zu falzenden Innen- und Außenflansche (9,10) befinden, die im gezeigten Ausführungsbeispiel von außen nicht sichtbar sind und nicht direkt erfasst werden. Alternativ kann die Erfassungseinrichtung (34) bei einer anderen Werkstückgestaltung die Blechränder oder Flansche (8,9) direkt erfassen.

Zusätzliche Referenzmarken können z.B. auch auf dem Gegenhalter (15) oder Falzbett angebracht sein, wenn der Gegenhalter (15) in der Anlagestellung die karosserieseitigen Referenzmarken (6) verdeckt.

Die Erfassungseinrichtung (34) kann in unterschiedlicher Weise ausgebildet und angeordnet sein. In Figur 3 und 7 ist eine Variante in Form eines optischen Erfassungssystems mit einer digitalen Kamera dargestellt, die ortsfest angeordnet sein kann oder die alternativ vom Manipulator (13) gemäß Figur 3 mitgeführt wird. Sie kann in das vorerwähnte Kombiwerkzeug integriert sein oder als separates Werkzeug gehandhabt werden. Alternativ kann die Erfassungseinrichtung (34) eine andere Sensorik, z.B. eine Kanten tastende Sensorik mit oder ohne Berühungskontakte aufweisen. Mittels der Erfassungseinrichtung (34) werden z.B. die eingangs erwähnten Referenzmarken (6) mit ihrer exakten räumlichen Position erfasst. Hieraus kann die räumliche Lage des zu falzenden Werkstückbereichs (3), des Falzrands (5) und der zu falzenden Flansche (9,10) ermittelt werden. Mit der Erfassungseinrichtung (34) werden die Ist-Daten dieser Werkstückteile am positionierten und gespannten Werkstück (2) ermittelt. Die Erfassungseinrichtung (34) ist ebenfalls mit der Robotersteuerung (32) verbunden.

In einer alternativen Ausführungsform ist es möglich, die Erfassungseinrichtung (34) als Steuerungsschnittstelle für eine Datenübertragung auszubilden, wobei die Ist-Daten der genannten Werkstückteile an anderer Stelle, z.B. in einer innerhalb der Fertigungslinie vorgeschalteten Bearbeitungsstation, erfasst, gespeichert und an die Robotersteuerung über die Schnittstelle übermittelt werden. Diese Ist-Daten können auf eine Spannposition des Werkstücks (2) bezogen sein, so dass bei einer Einnahme der gleichen Spannposition des Werkstücks (2) beim Falzen die genannten Ist-Daten sich aus dieser Spannposition und dem über die Stezierungsschnittstelle gemeldeten Ortsbezug ergeben.

Der Manipulator (13) führt das Falzwerkzeug (12) zum Biegen und Falzen des oder der Flansche (9,10) in das Radhaus und zum Falzen oder Bördeln entlang des Falzrandes (5) bzw. seiner Kontur mittels einer in der Steuerung (32) vorprogrammierten und gespeicherten Bahn. Die Bahn orientiert sich nach der Soll-Lage der Falzkontur (5), die ihrerseits den Verlauf der verborgenen Flansche (9,10) repräsentiert.

Die Falzkontur (5) kann eine beliebige Formgebung haben und ist im gezeigten Ausführungsbeispiel in einer runden Form gebogen. Alternativ kann sie eine gerade Form oder eine gebogene Form mit Ecken oder Winkeln haben. Anhand der Ist-Datenerfassung der Falzkontur (5) und der anderen relevanten Werkstückbereiche kann die Bahn bei Bedarf und bei etwaigen Abweichungen der Ist-Lage von der Soll-Lage nachgeführt und korrigiert werden, z.B. durch eine Basisverschiebung.

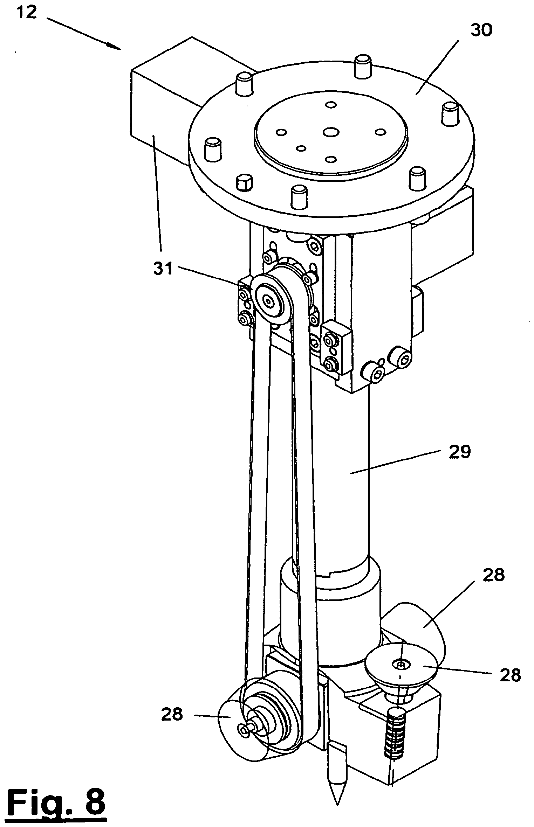

Das Falzwerkzeug (12) kann eine beliebig geeignete Ausgestaltung haben. Vorzugsweise ist das Falzwerkzeug (12) als einseitig am Falzrand (5) bzw. den Flanschen oder Blechrändern (9,10) angreifender Rollenfalzkopf ausgebildet, wobei der Gegenhalter (15) die Gegenabstützung bietet. Figur 8 zeigt hierfür ein Ausführungsbeispiel.

Das Falzwerkzeug (12) weist einen schlanken stangen- oder säulenförmigen Rollenträger (29) auf, der am einen Ende einen Anschluss (30) zur Verbindung mit der Hand (14) des Manipulators (13) trägt. Am anderen Trägerende sind ein oder mehrere Falzrollen (28) angeordnet. Bei einer Mehrfachanordnung können die Falzrollen (28) an unterschiedlichen Seiten des Rollenträgers (29) angeordnet sein und unterschiedliche Ausrichtungen sowie unterschiedliche Konturen, insbesondere am Rollenmantel, aufweisen. Das Falzwerkzeug (12) kann ferner einen steuerbaren und mit der Manipulatorsteuerung (32) verbundenen Rollenantrieb (31) aufweisen, mit dem die ein oder mehreren Falzrollen (28) drehend angetrieben werden können. Bei einer Mehrfachanordnung der Falzrolle (28) kann ein Verteilgetriebe angeordnet sein. Der Antrieb (31) ist nahe des Anschlusses (30) angeordnet und kann mit den distanzierten Falzrollen (28) bzw. dem Verteilergetriebe in geeigneter Weise, z.B. über den in Figur 8 gezeigten Riementrieb, verbunden sein. Am Vorderende des Rollenträgers (29) kann außerdem ein Zentrierdorn zum Referieren des Werkzeugs und seines Tool-Center-Points (sog. TCP) angeordnet sein.

Je nach Flansch- und Falzgeometrie werden die Blechränder oder Flansche (8,9) in ein oder mehreren Schritten und Winkeln gebogen und gefalzt. Die Falzrollen (28) haben hierfür eine entsprechende Geometrie, um diese Falzwinkel zu erzeugen, wenn sie in Anlage am Außenflansch (10) entlang der Falzkontur (5) bewegt werden. Die außenseitig am Umfang bzw. im Kreis um das untere Trägerende angeordneten Falzrollen (28) können vom Manipulator (13) in das Radhaus (3) eingeführt und an den oder die Flansche (9,10) angestellt und angepresst werden. Durch die Zustell- und Anpressbewegung werden die Falzkräfte zum Flanschbiegen aufgebracht, die über den Gegenhalter (15) stationär und ortsfest nach außen abgestützt werden.

Für den Ausgleich von kleinen Abweichungen von der Falzbahn kann die Falzrolle (28) begrenzt ausweichfähig gelagert sein. Der Roboter übt beim Falzen eine ziehende Kraft auf die Innen- und Außenflansche (9,10) zur Umformung aus. Die nicht dargestellte Feder ist derart angeordnet, dass die Falzrolle (28) minimal ausweichen und sich vom Anschluss (30) entfernen kann. Sie kann gegen die rückstellende Federkraft von den Flanschen (9,10) weggedrückt werden. Die federnde Lagerung kann für eine oder mehrere Falzrollen (28) vorhanden sein. Sie kann sich an dem Rollenträger (29) oder an anderer Stelle befinden.

Figur 13 bis 22 zeigen die eingangs erwähnte zweite Variante der Falteinrichtung (1).

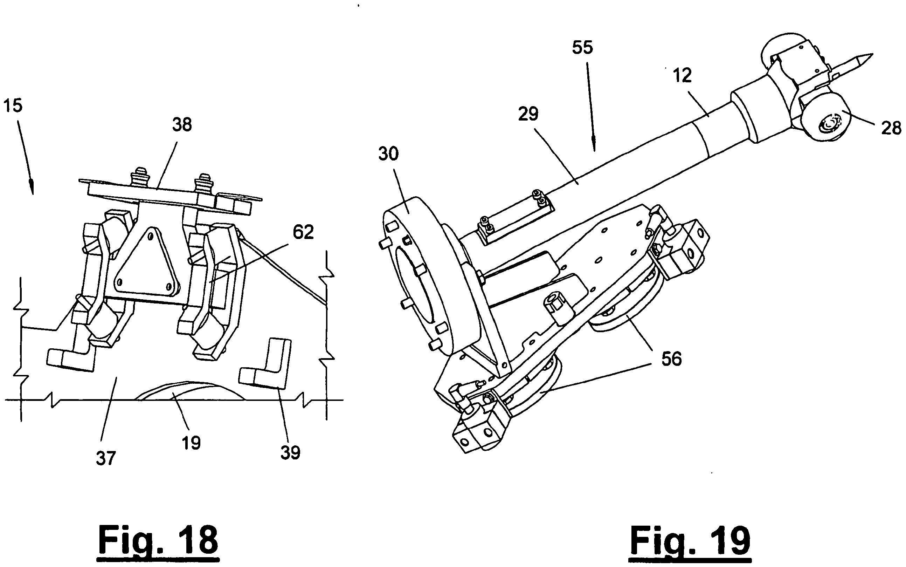

Die eine Abwandlung betrifft den Gegenhalter bzw. das Falzbett (15). Das an den zu falzenden Werkstückbereich (3) angepasste und gebogene Formteil (19) ist hier an einer anderen Halterung (36) angeordnet, die eine Grundplatte (37) mit einem der Falzkontur (5) folgenden Plattenausschnitt und mit einem Anschluss (38) zur Verbindung mit einem Handhabungswerkzeug (55) oder mit der Roboterhand (14) aufweist. Der Anschluss (38) kann sich an der Plattenoberseite befinden und eine schwimmende Aufhängung (62) gemäß Figur 18 zur Verbindung mit der Grundplatte (33) aufweisen.

An der Grundplatte (37) sind frontseitig am Rand des Plattenausschnitts das Formteil (19) und eine nachfolgend erläuterte Schutzeinrichtung (57) angeordnet. An der Frontseite kann sich außerdem ein Teil (50) der Erfassungseinrichtung (34) befinden. Dieses Erfassungsmittel (50) kann z.B. als frontseitig in y-Richtung abstehender Zentrierdorn ausgebildet sein, der in eine als Werkstücköffnung ausgebildete Referenzmarke (6) eingreift. An der Frontseite kann ferner ein in y-Richtung vorspringender Anschlag (59) angeordnet sein, der ggf. hakenförmig gebogen ist und der an dem vom Erfassungsmittel (50) abgewandten Ende des Formteils (19) angeordnet ist. Der Anschlag (59) kann mit der Werkstückunterseite, z.B. dem am Radhaus (3) angrenzenden Schweller, in Eingriff treten.

An der Rückseite der Grundplatte (37) sind mehrere Gegenstücke (40,41,42) für Zustellmodule (43,44,45) angeordnet, die unterschiedlich orientiert und quer zu den Zustellachsen in der x-,y- und z-Richtung ausgerichtet sind. Außerdem befinden sich an der Plattenrückseite ein oder mehrere Lagerelemente (39), mit denen der wechselbare Gegenhalter (15) in einer Ablage (54) in einem benachbarten Magazin (53) in definierter Lage abgelegt werden kann. Mittels der Lagerelemente (39) kann auch eine Vorpositionierung des Gegenhalters (15) an Aufnahmen (60) des Gestells (22) erfolgen.

Figur 13 zeigt in der Draufsicht eine Falzeinrichtung (1) bzw. eine Falzstation mit dem besagten Magazin (53) nebst Ablagen (54) und mehreren wechselbaren Gegenhaltern (15), die an unterschiedliche Typen von Werkstücken, insbesondere Fahrzeugkarosserien, angepasst sind. Für den Wechsel der Gegenhalter (15) kann der ohnehin vorhandene Manipulator (13) eingesetzt werden. Dieser kann an seiner Hand (14) ein multifunktionales Handhabungswerkzeug (55) tragen, welches z.B. als Kombiwerkzeug zum Falzen und Handhaben ausgebildet ist. Es besteht zum einen aus dem vorbeschriebenen Falzwerkzeug (12) und zum anderen aus einer angebauten Docking-Einrichtung (56), die mit dem Anschluss (38) am Gegenhalter (15) zusammenwirken kann. Das Falzwerkzeug (12) kann während der Handhabung längs der Grundplatte (37) ausgerichtet sein. An der Falzstation kann außerdem ein weiterer Manipulator oder Roboter (13) gemäß Figur 13 zum Bestücken der mehrteiligen Ablage (54) und zum Austausch von Gegenhaltern (15) angeordnet sein.

Die Stützeinrichtung (16) ist in der zweiten Variante ebenfalls gegenüber dem ersten Ausführungsbeispiel abgewandelt. Das Gestell (22) weist einen aufrecht stehenden Rahmen (51) auf, der auf einem Schlitten (52) angeordnet ist und mit einer angetriebenen, steuerbaren Stelleinrichtung (61), z.B. einem Zylinder, in y-Richtung an das Werkstück (2) bewegt werden kann und dabei den am Rahmen (51) aufgenommenen Gegenhalter (15) in einem ersten Schritt zustellt.

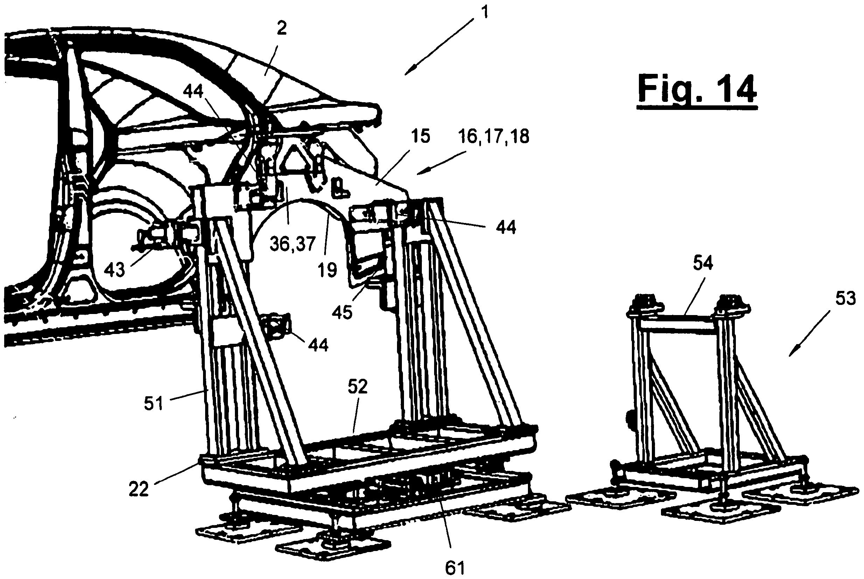

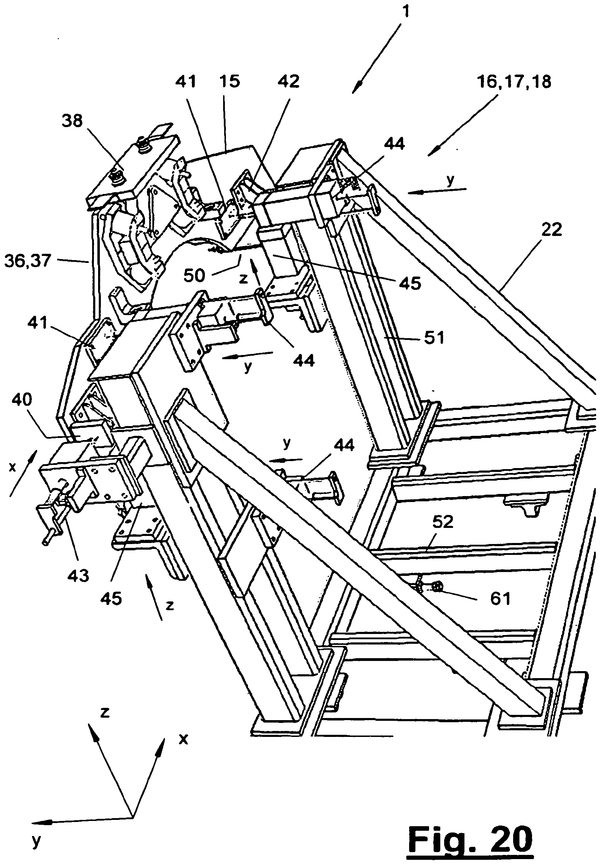

Die Positionier- und Fixiereinrichtung (17,18) besteht in der zweiten Variante aus mehreren Zustellmodulen (43,44,45), welche die Funktion der Stützelemente (23) und ihrer Stangen (24,25) sowie Antriebe (27) des ersten Ausführungsbeispiels übernehmen. Hierbei ist ein Zustellmodul (43) für die x-Richtung vorgesehen. Für die vertikale z-Richtung gibt es zwei parallele Zustellmodule (45) und für die quer zum Werkstück (2) gerichtete y-Richtung drei räumlich verteilte Zustellmodule (44). Hierüber können die in Figur 12 gezeigten mehrachsigen Beweglichkeiten einschließlich Drehachsen realisiert werden. Die Zustellmodule (43,44,45) sind am Rahmen (51) mit unterschiedlichen Orientierungen angeordnet und wirken mit den vorerwähnten Gegenstücken (40,41,42) zusammen. Figur 14 und 20 zeigen den Rahmen (51) mit den Zustellmodulen (43,44,45) und mit angebautem Gegenhalter (15), der vom Manipulator (13) mit den Gegenstücken (40,41,42) in einer vorgegebenen Position auf den entsprechend ausgefahrenen Zustellmodulen (43, 44, 45) abgelegt wird.

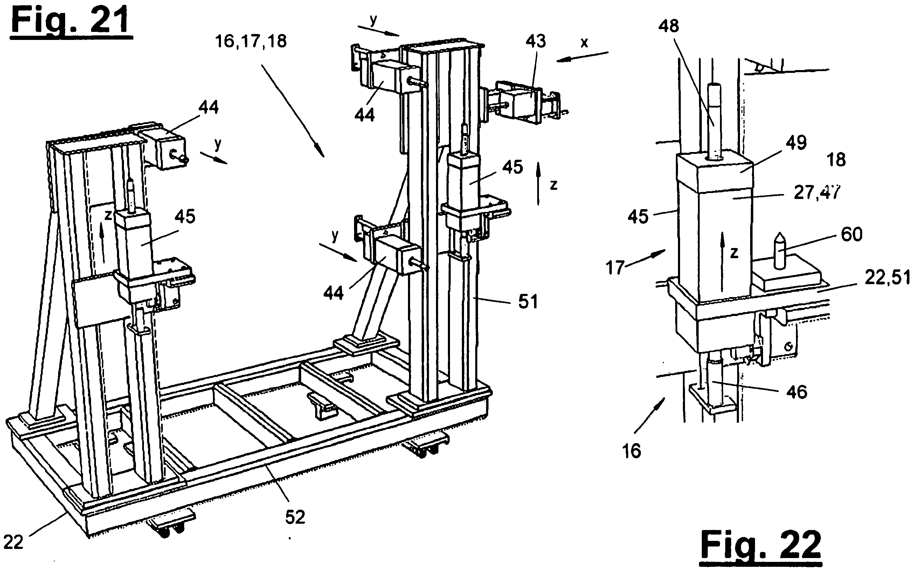

Figur 21 zeigt die Anordnung und Verteilung der Zustellmodule (43,44,45). In Figur 22 ist eine abgebrochene und vergrößerte Darstellung eines vertikalen Zustellmoduls (45) mit Wirkung in Z-Richtung zu sehen. Die Zustellmodule (43,44,45) können gleichartig ausgebildet sein und bilden zugleich einen Teil der Positioniereinrichtung (17) und der Fixiereinrichtung (18). Sie weisen jeweils einen Antrieb (27) in Form eines Zylinders (47) auf, dessen Kolbenstange (48) als Stellelement fungiert und beidseits aus dem Zylindergehäuse ragt und an der Frontseite in Kontakt mit dem quer liegenden plattenförmigen Gegenstück (40,41,42) tritt. Die Gegenstücke (40,41,42) können sich beim Positionieren relativ zur Kolbenstange (48) bewegen. An der Vorderseite des Zylinders (47) kann ein Teil der Fixiereinrichtung (18), z.B. in Form einer Klemmeinrichtung (49) für die Kolbenstange (48), angeordnet sein. An der Rückseite kann die Kolbenstange (48) mit einem Sensor (46) verbunden sein, der z.B. als Wegmesser oder Positionsmesser ausgebildet ist für die Erfassung der Ein- und Ausfahrbewegungen der Kolbenstange (48).

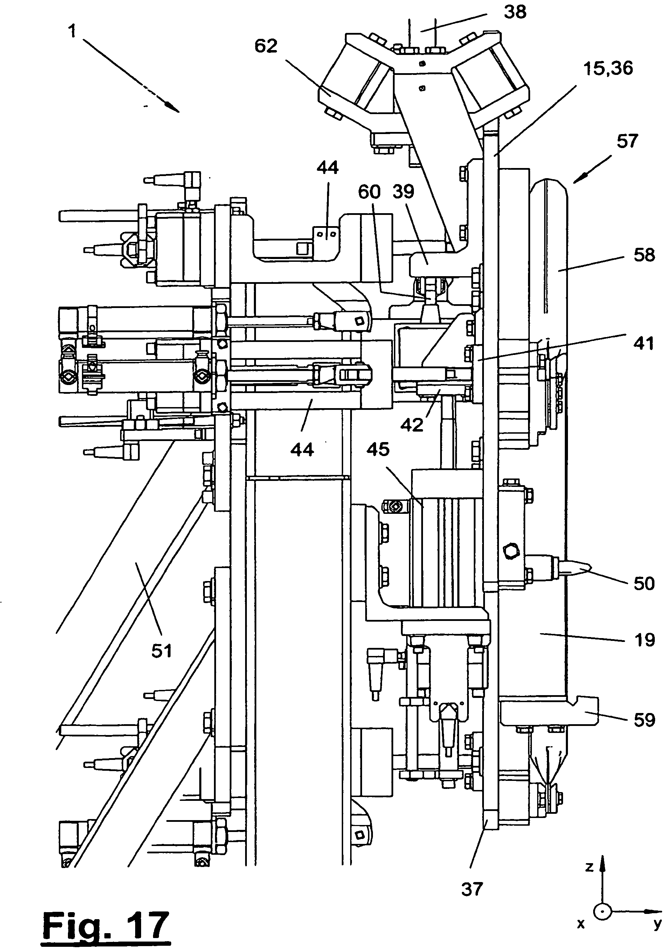

Der Gegenhalter (15) wird in der gezeigten variante mittels seiner Lagerelemente (39) am Rahmen (51) über dortige Aufnahmen (60) eingehängt und vorpositioniert. Die in Figur 17 und 22 schematisch dargestellte Aufnahme (60) besteht z.B. aus einem hochstehenden Bolzen, der auf einer elastischen Unterlage, z.B. einem Gummipuffer, angeordnet ist und lineare sowie rotatorische Ausweichbewegungen beim Positionieren des Gegenhalters (15) ausführen kann. Die z.B. zwei Aufnahmen (60) können auf Sockeln neben den Zustellmodulen (45) für die z-Richtung angeordnet sein und greifen mit ihren Bolzen in Stecköffnungen der Lagerelemente (39).

Die Zustellung und Positionierung des Gegenhalters (15) am Werkstück (2,3) erfolgt in der gezeigten Variante mehrstufig. Beim ersten Zustellschritt wird der Rahmen (51) an das Werkstück (2) in y-Richtung angenähert, wobei über das Erfassungsmittel (50), insbesondere den Zentrierdorn, die Referenzmarke (6) gesucht wird. Durch deren gegenseitigen Eingriff wird der schwimmend auf den Aufnahmen (60) gelagerte Gegenhalter (15) in der x- und z-Richtung positioniert.

Nach der Arretierung des Rahmens (51) wird das Formteil (19) in seiner Drehlage an die Ist-Lage der Falzkontur (5) angepasst und positioniert. Hierzu hebt das vom Erfassungsmittel (50) weiter distanzierte und in Figur 21 rechte Zustellmodul (45) für die z-Richtung den Gegenhalter (15) an und dreht ihn um die durch das Erfassungsmittel (50) verlaufende y-Achse nach oben, bis der Anschlag (59) am Werkstück (2) anliegt. Das andere Zustellmodul (45) fährt seine Kolbenstange (48) ebenfalls entsprechend aus, wobei der Gegenhalter in z-Richtung abgestützt wird. Die Kräfte der Antriebe (27,47) der Zustellmodule (45) können auf das Gegenhaltergewicht und die erforderliche Hebe- und Stützkraft ausgelegt und begrenzt sein.

Das Zustellmodul (43) für die x-Richtung ist mit Abstand oberhalb des Erfassungsmittels (50) angeordnet und registriert mit seinem Sensor (46) eine evtl. Verlagerung des Gegenhalters (15) in x-Richtung bei den vorigen Zustell- und Positionierschritten. Das Zustellmodul (43) kann vor allem Erfassungsdienste leisten, weshalb hier auf eine Klemmeinrichtung (49) verzichtet werden kann und der Vorschub des Antriebs (27,47) auf eine entsprechend geringe Kraft eingestellt ist.

Im nächsten Zustell- und Positionierschritt führen die anderen, mit Seiten- und Höhenversatz angeordneten Zustellmodule (44) die restliche Zustellung in y-Richtung und auch die Neigungsanpassung für das Formteil (19) mit einer evtl. Drehung um die x- und z-Achse durch und pressen dieses mit voreingestellter Kraft gegen das Werkstückteil (3). In der Endposition werden die Klemmeinrichtungen (49) betätigt und die Position gesichert.

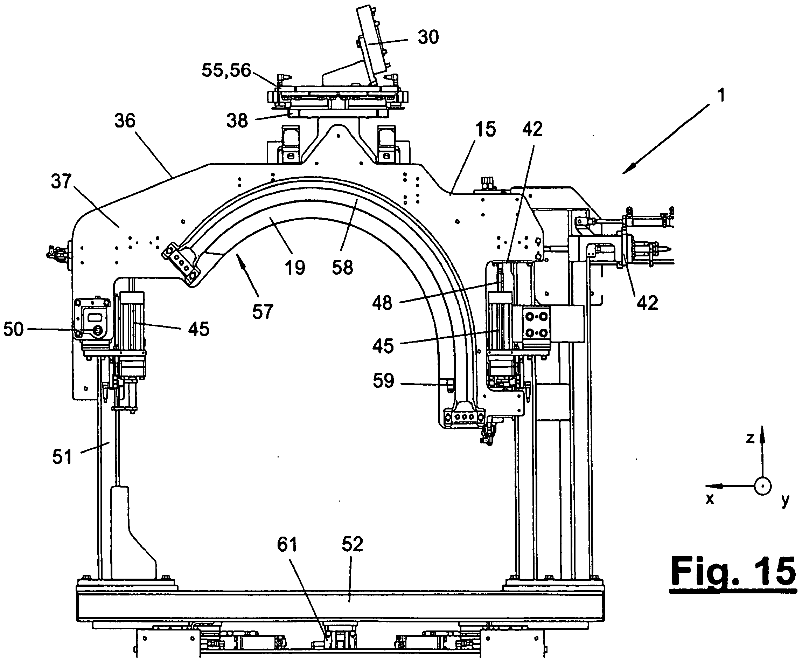

Die vorerwähnte Schutzeinrichtung (57) kann als sog. Soft-Touch ausgebildet sein und dient zum weichen und beschädigungsfreien Zustellen des Formteils (19) an den Werkstückbereich (3), insbesondere das Radhaus. Figur 15 bis 17 verdeutlichen diese Anordnung.

Die Schutzeinrichtung (57) weist ein steuerbares Anpresselement (58) auf, das seine Abmessungen, insbesondere seine Dicke, gesteuert ändern kann. Das Anpresselement (58) ist z.B. als flexibler und aufblasbarer Druckschlauch aus einem weichen und elastischen Material, insbesondere Gummi oder einem anderen Kunststoff, ausgebildet. Das Anpresselement (58) ist am äußeren Rand des Formteils (19) angeordnet und erstreckt sich entlang dieses Randes. Es kann die gleiche Länge wie das Formteil (19) haben. Alternativ können mehrere kürzere Anpresselemente an relevanten Stellen verteilt über die Formteilkontur angeordnet sein.

Vor dem Anlegen des Falzbettes (15) bzw. des Formteils (19) an das Werkstück (2) wird das Anpresselement (58) expandiert, insbesondere aufgeblasen und ragt in Zustellrichtung y über das Formteil (19) hinaus. Das expansionsfähige Anpresselement (58) ist mit einer Messeinrichtung verbunden, welche die Expansion erfassen und z.B. den Innendruck in dem mit Druckluft gefüllten Druckschlauch messen kann. Die Zylinder (47) der Zustellmodule (44), welche den Vorschub des Gegenhalters (15) in y-Richtung besorgen, üben eine entsprechend abgestimmte Gegendruckkraft aus, bis ein Kräftegleichgewicht entsteht. Das Anpresselement (58) liegt dann am Werkstückbereich (3) an, wobei das Formteil (19) hiervon noch distanziert ist. Anschließend wird die Expansion bzw. der Druck im Anpresselement (58) langsam reduziert, wobei der in den Zylindern (47) der Zustellmodule (44) aufrecht erhaltene Druck den Gegenhalter (15) und sein Formteil (19) mit der der Druckreduktion entsprechenden Geschwindigkeit langsam auf das Werkstück (2) zubewegen. Hierdurch wird ein sauberes und beschädigungsfreies Anschmiegen des Formteils (19) bzw. des Falzbetts (15) an das Werkstück (2) und seinen Werkstückbereich (3) erreicht.

Über die Sensoren der in x-, y- und z-Richtung ausgerichteten Kolbenstangen (48) können bei der Zustellung des Gegenhalters (15) alle Linearbewegungen erfasst werden. Hieraus kann die Ist-Lage des Formteils (19) bzw. Falzbetts (15) am Werkstück (2,3) bestimmt werden. Diese Daten bzw. evtl. Differenzen gegenüber vorgegebenen Soll-Werten können an die Robotersteuerung gemeldet werden, welche die Positionsdaten auswertet und vor dem Falzen ggf. die programmierte Falzbahn des Roboters entsprechend korrigiert. Die Sensoren (46) können hierbei ein Teil der Erfassungseinrichtung (34) sein. Bei dieser Variante ist es nicht erforderlich, mit dem Manipulator (13) vor dem Falzen eine separate Messfahrt durchzuführen.

Abwandlungen der gezeigten und beschriebenen Ausführungsformen sind in verschiedener Weise möglich. Konstruktive und kinematische Variationen sind hinsichtlich der Stützeinrichtung (16) und ihrer Komponenten, insbesondere der Positioniereinrichtung (17) möglich. Die Zustellmodule (43, 44, 45) können motorische Spindeltriebe oder andere Antriebe (27) mit anderen Abtriebselementen aufweisen. Auch die Form und Ausbildung des Gegenhalters (15) kann variieren. Variabel ist auch die Form und Ausbildung des Falzwerkzeugs (12) und der Erfassungseinrichtung (34). Das Falzwerkzeug (12) kann alternativ gleitfähige Falzkufen oder andere Falzmittel haben, die bei einer robotergeführten Bewegung in Andrückstellung entlang der Falzkontur (5) und des Flanschverlaufs die Flansche (9,10) biegen. In einer weiteren Variante kann das Falzwerkzeug (12) ein oder mehrere feste oder bewegliche Falzbacken haben, die sich entlang der Falzkontur (5) und des Flanschverlaufs erstrecken und durch eine Querbewegung mittels eigenem Antrieb oder durch den Manipulator quer gegen die Flansche (9,10) gedrückt werden und diese abbiegen oder umbiegen. Der Manipulator (13) positioniert ein solches Falzwerkzeug im Radhaus und bewegt es allenfalls quer zum Flanschverlauf. Ferner können je nach Werkstückform auch Eckenschieber, Nachformschieber oder dgl. vorhanden sein.

Ferner ist es möglich, im Arbeitsbereich des Manipulators (13) ein oder mehrere und ggf. unterschiedliche Magazine (53) für unterschiedliche Gegenhalter (15) bzw. Formteile (19) und/oder Manipulatorwerkzeuge, z.B. Falzwerkzeuge, Greif- bzw. Zustellwerkzeuge, Erfassungseinrichtungen (34) oder dgl. anzuordnen und an der Hand (14) eine Wechselkupplung anzuordnen. Die Falzeinrichtung (1) kann dadurch flexibilisiert werden und lässt sich schnell bei einem Typwechsel der Karosserieteile (2) oder generell bei einer Werkstückänderung umrüsten. Dies ist in modernen Karosseriefertigungen wegen der dort häufigen Kleinserienfertigung und des freien Typenmixes wichtig und vorteilhaft.

### BEZUGSZEICHENLISTE

- 1: Falzeinrichtung
- 2: Werkstück, Karosserieteil, Seitenwand
- 3: Werkstückbereich, Radhaus
- 4: Rad, Fahrzeugrad
- 5: Falzrand, Falzkontur
- 6: Referenzmarke
- 7: Blech, Innenblech
- 8: Blech, Außenblech
- 9: Innenflansch
- 10: Außenflansch
- 11: Falz
- 12: Falzwerkzeug, Falzkopf
- 13: Manipulator, Roboter
- 14: Hand, Roboterhand
- 15: Gegenhalter, Falzbett
- 16: Stützeinrichtung
- 17: Positioniereinrichtung
- 18: Fixiereinrichtung
- 19: Formteil
- 20: Halterung
- 21: Halterung
- 22: Gestell
- 23: Stellelement, Stützelement
- 24: Stange
- 25: Stange
- 26: Gelenk
- 27: Antrieb
- 28: Falzrolle
- 29: Rollenträger
- 30: Anschluss
- 31: Rollenantrieb
- 32: Steuerung
- 33: Leitung
- 34: Erfassungseinrichtung
- 35: Anschluss
- 36: Halterung
- 37: Grundplatte
- 38: Anschluss
- 39: Lagerelement
- 40: Gegenstück für x-Richtung
- 41: Gegenstück für y-Richtung
- 42: Gegenstück für z-Richtung
- 43: Zustellmodul für x-Richtung
- 44: Zustellmodul für y-Richtung
- 45: Zustellmodul für z-Richtung
- 46: Sensor, Wegmesser
- 47: Antrieb, Zylinder
- 48: Stellelement, Kolbenstange
- 49: Klemmeinrichtung
- 50: Erfassungsmittel, Zentrierdorn
- 51: Rahmen
- 52: Schlitten
- 53: Magazin
- 54: Ablage
- 55: Handhabungswerkzeug, Kombiwerkzeug
- 56: Dockingeinrichtung
- 57: Schutzeinrichtung, Soft Touch
- 58: Anpresselement, Druckschlauch
- 59: Anschlag
- 60: Aufnahme
- 61: Zustelleinrichtung
- 62: Aufhängung

## Patentansprüche

1. Falzeinrichtung für Werkstücke (2), insbesondere Karosserieteile, wobei die Falzeinrichtung (1) mindestens einen mehrachsig beweglichen Manipulator (13) mit mindestens einem mitgeführten Falzwerkzeug (12) und einen mobilen und an den zu falzenden Werkstückbereich (3) zustellbaren Gegenhalter (15) aufweist, **dadurch gekennzeichnet, dass** der Gegenhalter (15) zum Abstützen der mit dem Falzwerkzeug (12) aufgebrachten Falzkräfte außerhalb des Werkstücks (2) abgestützt ist.

2. Falzeinrichtung nach Anspruch 1, **dadurch gekennzeichnet, dass** die Falzeinrichtung (1) eine Erfassungseinrichtung (34) für die Lage und ggf. die Form des zu falzenden Werkstückbereichs (3) aufweist.

3. Falzeinrichtung nach Anspruch 1 oder 2, **dadurch gekennzeichnet, dass** die Falzeinrichtung (1) eine außerhalb des Werkstücks (2) ortsfest abstützbare Stützeinrichtung (16) für den Gegenhalter (15) aufweist, wobei die Stützeinrichtung (16) eine mehrachsig bewegliche Positioniereinrichtung (17) für die Positionierung und ggf. die Zustellung des Gegenhalters (15) am Werkstück (2) und eine Fixiereinrichtung (18) zum Fixieren der Positioniereinrichtung (17) und der Gegenhalterposition aufweist.

4. Falzeinrichtung nach Anspruch 1, 2 oder 3, **dadurch gekennzeichnet, dass** die Positioniereinrichtung (17) ein stationär fixierbares Gestell (22) mit mehreren mehrachsig beweglichen und fixierbaren Stützelementen (23) für den Gegenhalter (15) aufweist.

5. Falzeinrichtung nach einem der vorhergehenden Ansprüche, **dadurch gekennzeichnet, dass** die Positioniereinrichtung (17) mehrere Gelenke (26) hat, wobei die Fixiereinrichtung (18) steuerbare Spannmittel zum Blockieren der Gelenke (26) aufweist.

6. Falzeinrichtung nach einem der Ansprüche 1 bis 4, **dadurch gekennzeichnet, dass** die Positionier- und Fixiereinrichtung (17,18) mehrere Zustellmodule (43, 44, 45) mit Zylindern (47) und Klemmeinrichtungen (49) aufweist, wobei die Zustellmodule (43, 44, 45) Sensoren (46) für die Erfassung der Ist-Lage des am Werkstück (2) positionierten Gegenhalters (15) aufweisen.

7. Falzeinrichtung nach einem der vorhergehenden Ansprüche, **dadurch gekennzeichnet, dass** das Gestell (22) einen Rahmen (51) und einen Schlitten (52) aufweist, wobei die Zustellmodule (43, 44, 45) am Rahmen (51) angeordnet sind.

8. Falzeinrichtung nach einem der vorhergehenden Ansprüche, **dadurch gekennzeichnet, dass** der Gegenhalter (15) eine oder mehrere Halterungen (20, 21, 36) zur Verbindung mit der Positioniereinrichtung (17) aufweist, wobei das Formteil (19) mit den Halterungen (20, 21, 36) lösbar verbunden ist und der Gegenhalter (15) lösbar mit der Stützeinrichtung (16) verbunden ist.

9. Falzeinrichtung nach einem der vorhergehenden Ansprüche, **dadurch gekennzeichnet, dass** der Gegenhalter (15) eine Halterung (36) mit einer Grundplatte (37) und mit mehreren Gegenstücken (40, 41, 42) für die Zustellmodule (43, 44, 45) aufweist.

10. Falzeinrichtung nach einem der vorhergehenden Ansprüche, **dadurch gekennzeichnet, dass** der Gegenhalter (15) eine Schutzeinrichtung (57) zum weichen Zustellen des Formteils (19) oder des Falzbetts (15) an das Werkstück (2) aufweist.

11. Falzeinrichtung nach einem der vorhergehenden Ansprüche, **dadurch gekennzeichnet, dass** die Schutzeinrichtung (57) ein am Formteil angeordnetes gesteuert expandierbares, weiches Anpresselement (58) aufweist.

12. Falzeinrichtung nach einem der vorhergehenden Ansprüche, **dadurch gekennzeichnet, dass** das Falzwerkzeug (12) als einseitig am Falzrand (5) angreifender Rollenfalzkopf ausgebildet ist, wobei der Gegenhalter (15) die Gegenabstützung bietet.

13. Falzeinrichtung nach einem der vorhergehenden Ansprüche, **dadurch gekennzeichnet, dass** das Falzwerkzeug (12) einen Rollenträger (29) mit ein oder mehreren Falzrollen (28) und einen Anschluss (30) zur Verbindung mit dem Manipulator (13) aufweist, wobei die Falzrolle(n) (28) einen steuerbaren Rollenantrieb (31) aufweisen.

14. Verfahren zum Falzen von Werkstücken (2), insbesondere Karosserieteilen, wobei ein mehrachsig beweglicher Manipulator (13) ein Falzwerkzeug (12) führt und an den zu falzenden Werkstückbereich (3) ein mobiler Gegenhalter (15) zugestellt wird, **dadurch gekennzeichnet, dass** die mit dem Falzwerkzeug (12) aufgebrachten Falzkräfte am Gegenhalter (15) abgestützt werden und der Gegenhalter (15) außerhalb des Werkstücks (2) abgestützt wird.

15. Verfahren nach Anspruch 14, **dadurch gekennzeichnet, dass** die Lage des zu falzenden Werkstückbereichs (3) mit einer Erfassungseinrichtung (34) erfasst und der Manipulator (13) mit dem Falzwerkzeug (12) entsprechend gesteuert wird.

## Claims

1. Hemming device for workpieces (2), in particular bodywork parts, wherein the hemming device (1) has at least one manipulator (13), which is movable about multiple axes and has at least one carried-along hemming tool (12), and a mobile brace (15) that can be applied against the workpiece region (3) to be hemmed, **characterized in that**, in order to support the hemming forces applied by way of the hemming tool (12), the brace (15) is supported outside the workpiece (2).

2. Hemming device according to Claim 1, **characterized in that** the hemming device (1) has a sensing device (34) for sensing the position and if necessary the shape of the workpiece region (3) to be hemmed.

3. Hemming device according to Claim 1 or 2, **characterized in that** the hemming device (1) has a supporting device (16) for the brace (15), said supporting device (16) being supportable in a fixed manner outside the workpiece (2), wherein the supporting device (16) has a positioning device (17), which is movable about multiple axes, for positioning and if necessary applying the brace (15) against the workpiece (2) and a fixing device (18) for fixing the positioning device (17) and the brace position.

4. Hemming device according to Claim 1, 2 or 3, **characterized in that** the positioning device (17) has a framework (22) that is fixable in a stationary manner and has a plurality of fixable supporting elements (23), which are movable about multiple axes, for the brace (15).

5. Hemming device according to one of the preceding claims, **characterized in that** the positioning device (17) has a plurality of joints (26), wherein the fixing device (18) has controllable tensioning means for blocking the joints (26).

6. Hemming device according to one of Claims 1 to 4, **characterized in that** the positioning and fixing device (17, 18) has a plurality of application modules (43, 44, 45) having cylinders (47) and clamping means (49), wherein the application modules (43, 44, 45) have sensors (46) for sensing the actual position of the brace (15) positioned against the workpiece (2).

7. Hemming device according to one of the preceding claims, **characterized in that** the framework (22) has a frame (51) and a carriage (52), wherein the application modules (43, 44, 45) are arranged on the frame (51).

8. Hemming device according to one of the preceding claims, **characterized in that** the brace (15) has one or more holders (20, 21, 36) for connecting to the positioning device (17), wherein the moulded part (19) is connected in a releasable manner to the holders (20, 21, 36) and the brace (15) is connected in a releasable manner to the supporting device (16).

9. Hemming device according to one of the preceding claims, **characterized in that** the brace (15) has a holder (36) having a base plate (37) and having a plurality of counterparts (40, 41, 42) for the application modules (43, 44, 45).

10. Hemming device according to one of the preceding claims, **characterized in that** the brace (15) has a protective device (57) for applying the moulded part (19) or the hemming bed (15) against the workpiece (2) in a gentle manner.

11. Hemming device according to one of the preceding claims, **characterized in that** the protective device (57) has a gentle pressure element (58) which is arranged on the moulded part and is expandable in a controlled manner.

12. Hemming device according to one of the preceding claims, **characterized in that** the hemming tool (12) is in the form of a roller hemming head that acts on one side on the hemming edge (5), wherein the brace (15) provides the counter-support.

13. Hemming device according to one of the preceding claims, **characterized in that** the hemming tool (12) has a roller carrier (29), which has one or more hemming rollers (28), and a connector (30) for connecting to the manipulator (13), wherein the hemming roller(s) (28) have a controllable roller drive (31).

14. Method for hemming workpieces (2), in particular bodywork parts, wherein a manipulator (13), which is movable about multiple axes, guides a hemming tool (12) and a mobile brace (15) is applied against the workpiece region (3) to be hemmed, **characterized in that** the hemming forces applied by way of the hemming tool (12) are supported at the brace (15) and the brace (15) is supported outside the workpiece (2).

15. Method according to Claim 14, **characterized in that** the position of the workpiece region (3) to be hemmed is sensed by way of a sensing device (34) and the manipulator (13) having the hemming tool (12) is controlled accordingly.

## Revendications

1. Dispositif de pliage de pièces usinées (2), notamment de parties de carrosserie, le dispositif de pliage (1) comportant au moins un manipulateur (13) mobile selon plusieurs axes doté d'au moins un outil de pliage (12) conjointement entraîné et un contre-support (15) mobile et positionnable contre la zone de pièce usinée (3) à plier, **caractérisé en ce que** le contre-support (15) est soutenu à l'extérieur de la pièce usinée (2) pour supporter les forces de pliage appliquées avec l'outil de pliage (12).

2. Dispositif de pliage selon la revendication 1, **caractérisé en ce que** le dispositif de pliage (1) comporte un dispositif de détection (34) pour détecter la position et le cas échéant la forme de la zone de pièce usinée (3) à plier.

3. Dispositif de pliage selon la revendication 1 ou 2, **caractérisé en ce que** le dispositif de pliage (1) comporte un dispositif de soutien (16) prévu pour le contre-support (15) et pouvant être soutenu fixement sur place à l'extérieur de la pièce usinée (2), le dispositif de soutien (16) comportant un dispositif de positionnement (17) mobile selon plusieurs axes pour le positionnement et le cas échéant la mise en place du contre-support (15) contre la pièce usinée (2) et un dispositif de fixation (18) pour fixer le dispositif de positionnement (17) et la position du contre-support.

4. Dispositif de pliage selon la revendication 1, 2 ou 3, **caractérisé en ce que** le dispositif de positionnement (17) comporte un châssis (22) pouvant être fixé de façon stationnaire avec plusieurs éléments de soutien (23) prévus pour le contre-support (15) et mobiles et fixables selon plusieurs axes.

5. Dispositif de pliage selon l'une quelconque des revendications précédentes, **caractérisé en ce que** le dispositif de positionnement (17) a plusieurs articulations (26), le dispositif de fixation (18) comportant des moyens de serrage commandables pour bloquer les articulations (26).

6. Dispositif de pliage selon l'une quelconque des revendications 1 à 4, **caractérisé en ce que** le dispositif de positionnement et de fixation (17, 18) comporte plusieurs modules de positionnement (43, 44, 45) dotés de cylindres (47) et des dispositifs de serrage (49), les modules de positionnement (43, 44, 45) comportant des capteurs (46) pour détecter la position réelle du contre-support (15) positionné contre la pièce usinée (2).

7. Dispositif de pliage selon l'une quelconque des revendications précédentes, **caractérisé en ce que** le châssis (22) comporte un cadre (51) et un coulisseau (52), les modules de positionnement (43, 44, 45) étant disposés contre le cadre (51).

8. Dispositif de pliage selon l'une quelconque des revendications précédentes, **caractérisé en ce que** le contre-support (15) comporte un ou plusieurs supports (20, 21, 36) pour réaliser la liaison avec le dispositif de positionnement (17), la pièce moulée (19) étant reliée de façon amovible aux supports (20, 21, 36) et le contre-support (15) étant relié de façon amovible au dispositif de soutien (16).

9. Dispositif de pliage selon l'une quelconque des revendications précédentes, **caractérisé en ce que** le contre-support (15) comporte un support (36) équipé d'une plaque de base (37) et de plusieurs contre-pièces (40, 41, 42) pour les modules de positionnement (43, 44, 45).

10. Dispositif de pliage selon l'une quelconque des revendications précédentes, **caractérisé en ce que** le contre-support (15) comporte un dispositif de protection (57) pour positionner en douceur la pièce moulée (19) ou la plaque de pliage (15) contre la pièce usinée (2).

11. Dispositif de pliage selon l'une quelconque des revendications précédentes, **caractérisé en ce que** le dispositif de protection (57) comporte un élément de compression (58) tendre expansible sur commande et disposé contre la pièce moulée.

12. Dispositif de pliage selon l'une quelconque des revendications précédentes, **caractérisé en ce que** l'outil de pliage (12) prend la forme d'une tête de pliage sur rouleaux s'agrippant unilatéralement sur le bord de pliage (5), le contre-support (15) permettant de réaliser un contre-appui.

13. Dispositif de pliage selon l'une quelconque des revendications précédentes, **caractérisé en ce que** l'outil de pliage (12) comporte un porte-rouleau (29) équipé d'un ou de plusieurs rouleaux de pliage (28) et un raccord (30) pour assurer la liaison avec le manipulateur (13), le ou les rouleaux de pliage (28) comportant un entraînement de rouleaux (31) commandable.

14. Procédé de pliage de pièces usinées (2), notamment de pièces de carrosserie, un manipulateur (13) mobile selon plusieurs axes guidant un outil de pliage (12) et un contre-support (15) mobile étant positionné dans la zone de la pièce usinée (3) à plier, **caractérisé en ce que** les forces de pliage appliquées par l'outil de pliage (12) sont supportées au niveau du contre-support (15) et que le contre-support (15) est soutenu à l'extérieur de la pièce usinée (2).

15. Procédé selon la revendication 14, **caractérisé en ce que** la position de la zone de pièce usinée (3) à plier est détectée par un dispositif de détection (34) et que le manipulateur (13) est commandé de façon correspondante par l'outil de pliage (12).
